# NEW EUROPEAN PATENT SPECIFICATION

(11) **EP 3 242 088 B2**
(45) Date of publication and mention of the opposition decision: **30.11.2022**
(45) Mention of the grant of the patent: 14.08.2019
(21) Application number: 17020183.4
(22) Date of filing: 01.05.2017
(51) Int. Cl.: F24D 19/10, G05D 23/19

(54) **HEATING SYSTEM AND METHOD FOR CONTROLLING A HEATING SYSTEM**
HEIZSTEUERUNGSSYSTEM UND VERFAHREN ZUR STEUERUNG DES HEIZSYSTEMS
SYSTÈME DE COMMANDE DE CHAUFFAGE ET PROCÉDÉ DE COMMANDE D'UN SYSTÈME DE CHAUFFAGE

(30) Priority: 01.05.2016 GB 201607627
(43) Date of publication of application: 08.11.2017
(73) Proprietor: tado GmbH, 80637 München (DE)
(72) Inventor: LANE, Westlund, 80809 München (DE); SVEA, Kübler, 80339 München (DE); TOBIAS, Schneider, 80333 München (DE)
(74) Representative: Ridderbusch, Oliver

(56) References cited:
- WO-A1-2012/095558
- WO-A1-2012/095558
- DE-A1- 3 315 828
- DE-A1- 3 315 828
- DE-A1- 4 414 260
- BAUMGARTH S.: "STRATEGIEN ZUR ENERGIEOPTIMALEN HEIZUNGSREGELUNG.", HLH ZEITSCHRIFT FUR HEIZUNG, LUFTUNG, KLIMATECHNIK,HAUSTECHNIK., VDI VERLAG. DUSSELDORF., DE, vol. 42., no. 05., 1 January 1991 (1991-01-01), pages 315-318., DE

## Description

### TECHNICAL FIELD

In a first aspect, the present disclosure is directed at a method for controlling a heating system, comprising the features of the preamble to claim 1.

In another aspect, the present disclosure is directed at a heating system, comprising the features of the preamble to claim 4.

### BACKGROUND

In a conventional method for controlling a heating system, the heating system comprises:
- a boiler or another heater configured to heat a liquid;
- a plurality of heat radiators, wherein each of a plurality of heating zones corresponds to one or more of the heat radiators , wherein heat emitting controls are provided which are configured to set a heating power of an associated heat radiator between a minimum possible heating power and a maximum possible heating power, (each heat radiator may thus be connected with a respective heat emitting control, which is also referred to as a heat emitting control device and may be, for example, a (smart) thermostat, such that each heat radiator can be controlled independently)
- at least a first pipe circuit fluidly connecting the boiler with (all or some of the) heat radiators, and
- a pump connected with the pipe circuit for pumping liquid (in particular the liquid heated by the boiler) through the first pipe circuit.

The method comprises the step of heating a liquid with a boiler or another heater, and supplying or pumping the liquid along at least a first pipe circuit to a plurality of heating zones. Each heating zone corresponds to one or more heat radiators. Heat emitting controls are provided which are configured to set a heating power of an associated heat radiator, i.e. there may be one heat emitting control per heat radiator. In this way, one and the same pipe circuit delivers heated liquid to several heating zones. Such a setup is common to keep the design of the pipe circuit simple. It is not necessary to have separate pipe circuits for supplying different heating zones. Instead, different temperatures for the different heating zones can be achieved with the plurality of heat emitting controls at merely one pipe circuit.

A pipe circuit may also be referred to as a heating circuit. It may define one circuit in which a fluid such as water is circulated for transferring heat. Different heating circuits may be understood as not being in fluidic connection. For instance, two heating circuits may be supplied with heated water from the same source, but heated water from one circuit is generally not transported into the other circuit.

There is a general need for efficient heating systems in which only as much heat is produced and distributed as actually needed. Although individual settings for the heating zones allow to avoid unnecessary high heat transfers, prior art methods do not adjust the boiler if less heat is required in the heating zones. There is hence a potential for further savings on heat costs if heat production or transfer from the boiler is further optimized.

This is also true for prior art heating control systems. A conventional heating control system, on which the invention is based, comprises a plurality of heat emitting controls. Each heat emitting control is configured to set a heating power of a respective heat radiator between a minimum possible heating power and a maximum possible heating power. The heat emitting controls correspond to a plurality of heating zones. Either each heat emitting control may correspond to a respective heating zone, or two or more heat emitting controls may correspond to one and the same heating zone. A heating zone may be understood as an area heated by the heat radiators included in this area and controlled by the heat emitting control(s) corresponding to that heating zone.

Again there is a need for further optimization of heating efficiency in adjusting the boiler or the energy transfer from the boiler.

WO 2012/095558 A1 relates to a method and a system for adjusting heat transfer in a building. Several heating units are supplied with heated water from a common source. A main valve is adjusted to set the temperature in the water supply to the heating units. DE 3315828 A1 describes a heating system with a plurality of heat radiators. A boiler is adjusted to meet the total heating demand of all radiators.

An **object** of the present disclosure is to provide a method for controlling a heating system and a heating system which allow for a particularly energy-efficient control of multiple heating zones.

### SUMMARY OF THE INVENTION

This object is solved with a method as defined in claim 1, and a heating system as defined in claim 4.

Exemplary embodiments are indicated in the dependent claims and in the following specification.

For the method of the invention, the heating system as defined above comprises:
- a control unit configured to control at least one of: the boiler / another heater and the pump, thus affecting the maximum possible heating powers that can be set at the heat emitting controls,
- the control unit further being configured to receive desired heating powers for the heating zones, (the control unit may thus comprise wireless or wired transmission means for receiving the desired heating powers; the desired heating powers in turn may be determined by communication devices and are transmitted by the communication devices which are arranged in the respective heating zones).

The method of the invention comprises, in addition to the above-described method steps, the steps of:
- determining which of the desired heating powers is the largest desired heating power,
- setting the heat emitting control(s) corresponding to the heating zone with the largest desired heating power to its/their maximum possible heating power(s), controlling the boiler or a flow rate of the liquid through the first pipe circuit (e.g. by controlling the pump) such that said set maximum possible heating power (i.e. the heating power set for the heating zone with the largest desired heating power) is equal to the largest desired heating power.

Similarly, according to the invention the heating control system as described above further comprises a control unit configured to:
- control at least one of: a boiler or another heater for providing heated liquid for the heat radiators, and flow control means (e.g. a pump or valve) for circulating the heated liquid, in particular for transporting the heated liquid to the heat radiators, the control unit thus affecting the maximum possible heating powers that can be set at the heat emitting controls,
- receive desired heating powers for the heating zones, and determine which of the desired heating powers is the largest desired heating power,
- set the heat emitting control(s) corresponding to the heating zone with the largest desired heating power to its/their maximum possible heating power(s),
- control the boiler / the another heater or the pump such that said set maximum possible heating power (i.e., the heating power set for the heating zone with the largest desired heating power) is equal to the largest desired heating power.

The desired heating powers are transmitted by communication devices (which are arranged in the respective heating zones) to the control unit.

A heating system of the invention comprises:
- the above-defined heating control system,
- a boiler or another heater configured to heat a liquid,
- a plurality of heat radiators, each heat radiator comprising one of said heat emitting controls,
- at least a first pipe circuit fluidly connecting the boiler with (all or some of the) heat radiators, and
- a pump connected with the first pipe circuit for pumping liquid through the first pipe circuit.

With the inventive method and heating control system, the heat produced with the boiler is adjusted to a minimum currently needed. The invention first determines the maximum heating power presently needed in the heating zones. Then, the boiler or its pump are controlled such that they only provide said maximum heating power, and not a higher heating power.

This control works for multiple heating zones. By avoiding unduly high heating powers at the boiler, overall heating costs can be reduced.

As an example, the boiler is operated such that it provides a certain heating power or temperature of the heated liquid. In the heating zones, different temperatures may be desired and hence there are different desired heating powers for the heating zones. For instance, the largest desired heating power may be 80% of the certain heating power currently provided by the boiler, and the second largest desired heating power may be 40% of the certain heating power. Prior art methods may now adjust the liquid flow rate at the heating zones to set the heating powers according to the desired heating power: For example, a flow rate may be reduced to 80% of a maximum possible flow rate to reach the largest desired heating power of 80%, and at another heat radiator the flow rate may be reduced to 40% to reach the above mentioned desired heating power of 40%. However, this does not entail a reduction or savings in the heat production at the boiler. This is achieved with the inventive method, in which the control unit adjusts the boiler or the liquid flow through the whole first pipe circuit: The control unit may reduce the heating power of the boiler to 80% of its present / certain heating power, and now the heat emitting control for the heating zone with the largest desired heating power is set to allow a maximum possible heating power, i.e. 100% of the reduced boiler power of 80%. To set the exemplary desired heating power of 40% at one of the other heating zones, its flow rate or heating power may now be set to 50%, because 50% of the reduced boiler power of 80% leads to the desired 40%.

The term "maximum possible heating power" as used in this disclosure may also be understood as a heating power slightly below a largest possible heating power; for instance, the "maximum possible heating power" may be regarded as a state in which a heat emitting control sets a flow rate to its respective heat radiator to 90% of a largest possible flow rate. (More general, instead of 90% any value between 85% and 100% may be used.) This has the advantage that a sudden increase in the largest desired heating power can be processed very fast in that possibly no changes at the boiler are necessary, but only the corresponding heat emitting control needs to adjust the flow rate to its heat radiator.

The steps of the inventive method are explained below in an exemplary way:
1. Determining which of the desired heating powers is the largest desired heating power: If different desired temperatures are set for the different heating zone, this results in different desired heating powers for these zones. Desired heating powers may also depend on the current actual temperatures measured in the different heating zones. Furthermore, the desired heating powers may depend on zone gradients which define by how many degrees Celsius per hour a zone can be heated (e.g., it may be possible to heat a small room by up to 4°C/hour but a larger room may only allow heating of 1°C/hour). The largest of the desired heating powers is now determined.
2. Setting the heat emitting control(s) corresponding to the heating zone with the largest desired heating power to the maximum possible heating power:
   Regardless of a specific value of the largest desired heating power, the corresponding heat emitting control(s) set their respective maximum possible heating power. This may be done by adjusting flow setting means (e.g. a valve or heat radiator pump) of the respective heat radiator(s) to a maximum flow rate. Without further measures, the maximum possible heating power may be larger or smaller than the desired heating power. As a next step, it is taken into account that the heating powers settable with the heat emitting controls depend on the temperature provided by the boiler and the flow rate through the whole first pipe circuit provided by the pump.
3. Controlling the boiler or the pump such that the maximum possible heating power set for the heating zone with the largest desired heating power is equal to the largest desired heating power: The boiler's heating power for heating the liquid may thus be adjusted, which may also be expressed as: The temperature of the heated liquid provided by the boiler is adjusted. This adjustment can be a stepless temperature adjustment. Alternatively or additionally, the flow rate of the heated liquid through the pipe system(s) may be adjusted, both cases affecting the heating powers settable at the heat emitting controls. The boiler's heating power (or boiler temperature) and/or the flow rate are now adjusted such that the maximum possible heating power (in the heating zone with the largest desired heating power) assumes the desired value, i.e. the value of the largest desired heating power.

The communication devices used for transmitting the desired heating powers may be any electrical devices suitable for transmitting information, e.g. by wireless or wired transmission. The communication devices may be part of the heat emitting controls, may be part of thermostat devices or may be separate units. The communication devices may also each comprise a temperature sensor for measuring a current temperature of the surrounding heating zone. There is at least one communication device per heating zone. The information gathered and/or sent by the communication device comprises a current ambient temperature and a desired temperature for the respective heating zone. The desired heating power is derived from the difference between the current ambient temperature and the desired temperature.

The liquid heated by the boiler may be water or generally any other fluid. In the alternative that the boiler or the another heater is controlled such that said set maximum possible heating power is equal to the largest desired heating power, the boiler or heater is a device suited to heat a liquid by burning fossil fuels such as oil or natural gas, and/or by using electrical energy or a chemical reaction to produce heat. For brevity, hereinafter reference is mostly made to a "boiler" but these descriptions shall equally apply to other heaters as mentioned above.

A heat radiator may be understood as a device through which heated liquid flows and which thus radiates heat to a surrounding. Heat radiators may be mounted to walls or may be integrated in the floor or a wall of a room. The surrounding of a heat radiator constitutes a respective heating zone. The heating zones may be different rooms of the same building. However, two or more different heating zones may also be in the same room. At least one heating zone includes more than one heat radiator.

The heat emitting control at each heat radiator may be an electrical device connected with the respective heat radiator or connected with a pipe leading to the respective heat radiator. For instance, the heat emitting control may be constituted by, may comprise or may control a thermostat of the respective heat radiator. Each heat emitting control may be configured to set a flow rate of the liquid through the respective heat radiator for setting the respective heating power. To this end, each heat emitting control may be connected to a valve or a pump allocated respectively to one of the heat radiators. In other words, each heat emitting control may comprise or be connected to a valve for adjustably setting the flow rate through the respective heat radiator, and/or a heat radiator pump for adjustably setting the flow rate through the respective heat radiator.

For the maximum possible heating power, the heat emitting control may set a maximum possible flow rate, e.g., by setting a valve to a completely open state or by setting a pump to an on-state or to a maximum pumping power. Analogously, the minimum possible heating power may be set by closing a valve completely or by turning off a pump. Intermediate heating powers between the minimum and maximum heating powers may be set by partially open a valve or setting a pump to an adjustable pumping power; alternatively, intermediate heating powers may be set by a time modulation, in which a valve is alternatingly opened and closed (the open and close times defining an average flow rate), or in which a pump is alternatingly activated and deactivated (the activation and deactivation times defining an average flow rate).

The first pipe circuit comprises tubes or channels that establish a transfer path for liquid from the boiler to some or all of the heat radiators. Some of the heat radiators or further heat radiators may be provided at one or more other pipe circuits that are also connected with the boiler (and optionally with the mentioned pump).

The first pipe circuit may form a loop in which heated liquid circulates. The pipe circuit may comprise branches to the different heat radiators. That means, a flow path may branch off the pipe circuit to lead to one of the heat radiators, and depending on a heating power set at this heat radiator, a flow rate of heated fluid (or a variable amount of the heated fluid) through this branch is adjusted, while the remainder of the heated fluid does not go through this branch. For instance, a maximum possible flow rate is set when all the heated fluid is directed through a branch to one of the heat radiators, and no heated fluid bypasses this heat radiator. For setting 60% of the maximum possible flow rate, 60% of the heated fluid is directed through the branch and the respective heat radiator, while 40% of the heated fluid bypasses this heat radiator.

The pump mentioned above may be part of the boiler or may be arranged between the boiler and the heat radiators. Adjusting the pumping power or setting the time intervals for toggling the pump between on and off states allows for adjusting the heat energy transported away from the boiler. For instance, the pump may be activated for x% (e.g. 60%) of time to achieve an x% heating power (e.g. 60% heating power) of a maximum possible heating power defined by a continuous / permanent activation of the pump. As the boiler may comprise a control device for adjusting its heat production such that a predefined temperature of the heated liquid is reached, the control of the pump eventually leads to adjustment of the heat production with the boiler, avoiding an unduly high heat production.

The control unit may thus be configured to control the pump to set a flow rate of liquid by time modulating the flow rate of liquid between two possible values. The two possible values may correspond to on/off states or open/closed states. Time modulating means that each of the two states is set for such a time that a time average leads to the desired flow rate or heating power.

For instance, the boiler may presently provide a certain heating power, and the largest desired heating power at any of the heating zones may be 80% of this heating power. The control unit may now set the flow rate from the boiler through the pipe circuit to 80% of a maximum possible flow rate (e.g. by opening a valve for 80% of time, and closing it for 20% of the time). The largest desired heating power is now set by opening a respective valve at this heating zone all the time, or by activating a pump at this heating zone all the time. Another desired heating power for another heating zone may be 40% of the above-mentioned heating power of the boiler. To set the heating power of this heating zone to correspond to the desired 40% heating power, its valve may be alternatingly opened and closed, wherein it is open for half the time and closed for half the time, leading to 50% flow rate of a maximum possible flow rate, and hence leading to 50% * 80% (boiler heating power) = 40%.

In more general words, the control unit may thus also set heating powers of those heat emitting controls that correspond to other heating zones than the heating zone with the largest desired heating power. These heating powers are set in dependence of the desired heating powers for the respective heating zones, and in dependence of the current settings of the boiler and the flow control means. If the settings of the boiler and the flow control means are changed (and the desired heating powers for these heating zones remain unchanged), then the heating powers for these heating zones are inversely changed. For instance, if the boiler and the flow control means are changed such that a heating power provided with the heated liquid is increased by x%, then the heating powers for the above-referenced heating zones are decreased to (fully) compensate the increase of x%.

Heat emitting controls that correspond to one and the same heating zone are set equally, i.e. set to a similar flow rate or heating power. If several heat emitting controls correspond to the heating zones with the largest desired heating power, then all of these heat emitting controls are set to their respective maximum possible heating power.

The desired heating powers are determined from a monotone function that determines the desired heating powers from a difference (defined below), i.e. each desired heating power is a monotone function of a respective difference. Said difference is a difference between measured temperatures T_{M} in the heating zones and desired temperatures T_{D} in the heating zones: T_{D} - T_{M}. In other words, the more the desired temperature in a heating zones is above the measured temperature in this heating zone, the larger the desired heating power shall be. The heat emitting controls may comprise a mapping function that yields a heating power value for any input of measured temperature and given desired temperature.

Whereas the embodiments above mention only a first pipe circuit, these embodiments work equally well with a plurality of pipe circuits that are arranged parallel to each other (i.e., heated liquid is divided onto these parallel pipe circuits and does not successively run through the pipe circuits one after the other).

In particular, the heating system may further comprise a second pipe circuit arranged in parallel to the first pipe circuit. Some of the heat radiators mentioned above are arranged at the first pipe circuit and others of the heat radiators are arranged at the second pipe circuit. The above-specified control by the control unit is now based on the largest desired heating power of any heat radiator of all pipe circuits.

Furthermore, a mixer may be provided and configured to mix heated liquid and another liquid. The heated liquid may in particular be liquid heated from the boiler before reaching the heat radiators. The another liquid may be colder than the heated liquid, and may for instance be liquid coming from the heat radiators, i.e., liquid first heated by the boiler and then having lost heat at the heat radiators. The mixer is connected between the boiler and the first pipe circuit and connected between the boiler and the second pipe circuit. The method may comprise the step of: controlling the mixer such that only liquid heated by the boiler and not another liquid flows through the pipe circuit at which the heating zone with the largest desired heating power is located. For the other pipe circuit(s) that only require less heating energy, the mixer may supply a mix of heated liquid and the another liquid, which is generally colder than the heated liquid.

Heat radiators are above described with a respective channel branching off the pipe system and supplying the respective heat radiator. However, two or more of the mentioned heat radiators may also be arranged at the same channel branching off the pipe system.

In particular in such a case, the heating system may further comprise an intermediary heat control connected between the boiler and at least two of the heat emitting controls (i.e., the heat emitting controls of those heat radiators that are arranged at a common channel branching of the pipe system). The intermediary heat control may be configured to set a flow rate to said at least two heat emitting controls, thus affecting the maximum possible heating power for said at least two heat emitting controls. The above-described method may additionally comprise the step of setting the intermediary heat control to a maximum possible flow rate, regardless of the desired heating powers of said at least two following heat emitting controls. The heating powers can still be set with the respective heat emitting controls. This procedure is particularly advantageous if the intermediary heat control is based on a pump that must be alternatingly activated and deactivated to set on average a desired flow rate or heating power. Alternatingly activating and deactivating a pump may lead to wear on the pump and may deteriorate its life expectancy. Wear on the pump may thus be reduced by turning on the pump all the time and avoiding on/off toggles.

A further characteristic of preferred embodiments becomes apparent in cases when the value of the largest desired heating power is changed but remains the largest desired heating power. In contrast to prior art methods, in this case the corresponding heat emitting control (of the heating zone with largest desired heating power) does not adjust the corresponding heating power. Instead, the boiler or the pump is controlled such that the maximum possible heating power set for said heating zone with the largest desired heating power is equal to the changed largest desired heating power.

The boiler and/or pump control thus depends on the largest desired heating power but not on the desired heating powers of the remaining heating zones. If these desired heating powers of the remaining heating zones are changed, the boiler and/or pump control is not adjusted; instead the respective flow control means of these heating zones (e.g. individual valves or heat radiator pumps that affect only the respective heating zone) are adjusted.

In variants of the described heating control system, the control unit is further configured to (automatically) execute the described method steps.

Further properties and advantageous of the invention will become readily understood from the attached schematic drawings of exemplary embodiments. The invention is not intended to be restricted to the shown embodiments.

### BRIEF DESCRIPTION OF THE DRAWINGS

Fig. 1 shows a first embodiment of a heating system of the invention.
Fig. 2 shows a second embodiment of a heating system of the invention.

### DETAILED DESCRIPTION

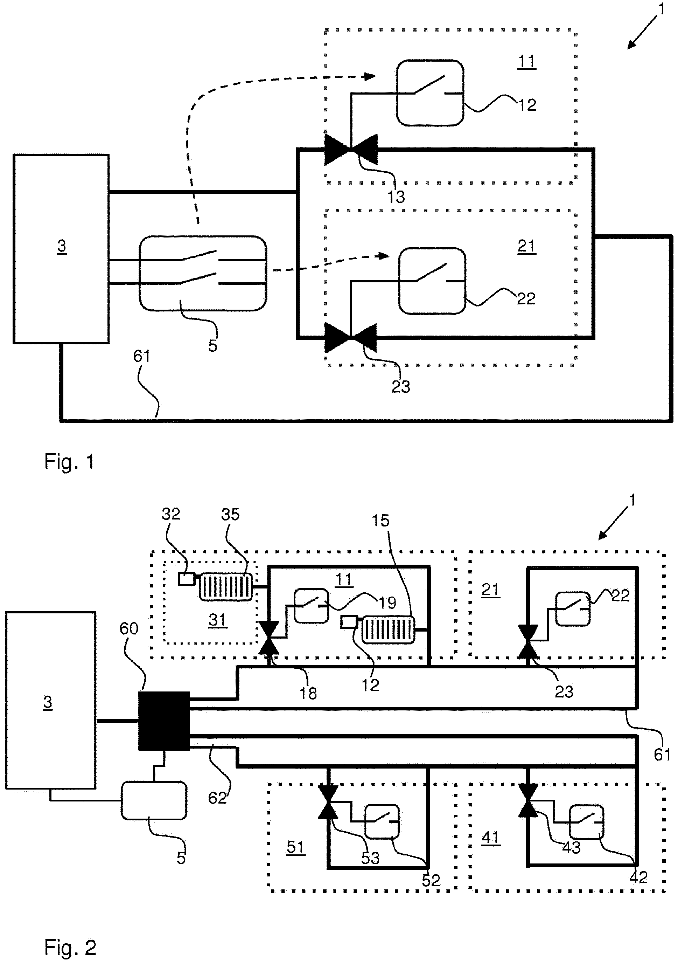

Fig. 1 schematically illustrates a first embodiment of a heating system 1 of the invention. The heating system 1 comprises a heater 3 such as a boiler 3 for heating a liquid, and at least a first pipe circuit 61 for distributing the heated liquid. The pipe circuit 61 forms a loop, along which a plurality of heat radiators (not shown) are arranged. These heat radiators are thus supplied with heated liquid by the same pipes of the pipe circuit 61. Each heat radiator can be controlled individually and thus may form an individual heating zone, or several heat radiators may jointly form one heating zone. The dotted boxes 11 and 21 indicate two separate heating zones 11, 21. The heating zones 11, 21 may in particular correspond to different rooms (in particular in the same building). For controlling ambient temperatures in the heating zones 11, 21, there may be one heat emitting control 12, 22 per heating zone 11, 21 or per heat radiator. The heat emitting controls 12, 22 are coupled to flow setting means 13, 23 for individually setting a flow rate of heated liquid through the respective heat radiator. The flow setting means 13, 23 may, for instance, comprise a valve or a pump (referred to as heat radiator pump). If desired heating powers differ for the heating zones 11, 21, the corresponding heat emitting controls 12, 22 can set different flow rates for theses heating zones 11, 21.

As a general example, a desired heating power in heating zone 11 may be larger than desired heating powers in the other heating zones 21. Hence, the desired heating power for heating zone 11 is the largest desired heating power. The heat emitting control 12 now sets a maximum possible flow rate at the flow setting means 13, e.g., by completely and constantly opening a valve 13 that sets the flow rate though this heating zone 11 (and not through the other heating zones 12), or by activating a heat radiator pump 13 for pumping heated liquid through this heating zone 11 (and not through the other heating zones 12).

The set maximum possible flow rate of heating zone 11 may correspond to a heating power different from the desired heating power for this heating zone 11. As a next step, a control unit 5 adjusts the boiler 3 and/or a pump (not shown) that pumps heated liquid through the pipe circuit 61. The control unit 5 thus sets a temperature of the heated liquid and/or a flow rate of the heated liquid along the pipe circuit 61. In this way, the control unit 5 influences the heating powers set with the heat emitting controls 12, 22. The temperature and/or flow rate of the heated liquid will now be set with the control unit 5 such that the maximum possible flow rate of heating zone 11 (i.e. the set heating power) corresponds / is identical to the desired heating power for this zone 11.

In this way, the desired heating powers are set and energy is saved by adjusting the boiler or the flow rate of liquid heated by the boiler. This is in contrast to prior art methods, in which the desired heating powers do not affect a control of the boiler and/or a control of a pump for circulating the heated liquid in the pipe circuit 61.

Fig. 2 shows a second embodiment of a heating system 1 of the invention. Components similar or identical to components shown in Fig. 1 are indicated with the same reference signs.

The heating system 1 of Fig. 2 comprises a plurality of pipe circuits 61, 62. The first pipe circuit 61 connects to several heat radiators. In this example each heat radiator constitutes a heating zone 11, 21, 31. The second pipe circuit 62 connects to several other heat radiators, constituting different heating zones 41, 51. The pipe circuits 61, 62 may be separated from each other, i.e. liquid circulating in one pipe circuit 61 may not enter the other pipe circuit 62, and vice versa. The pipe circuits 61, 62 are in fluidic connection with the boiler 3 via a mixer 60. The mixer 60 adjustably mixes heated fluid from the boiler with other fluid (cold water) which is colder than the liquid coming (directly) from the boiler 3. This mixing is performed independently for each pipe circuit 61, 62. In this way, different temperatures of heated fluid can be provided for the different pipe circuits 61, 62.

The heating zone with the largest desired heating power of all pipe circuits 61, 62 may be, for example, heating zone 21 in pipe circuit 61. In this case, the mixer does not add cold water to the heated liquid for this pipe circuit 61 (in which the heating zone 21 with the largest desired heating power is located). However, the mixer may add cold water to the other pipe circuit 62.

Fig. 2 shows a further exemplary characteristic, namely an intermediary heat control 18 connected between the boiler 3 and at least two of the heat emitting controls 12, 32. Such an intermediary heat control 18 forms a heating zone 11 that encloses the at least two heat emitting controls 12, 32, and their corresponding heat radiators 15, 35. The heating zone 31 of the heat radiator 35 is thus within the heating zone 11. Such a scenario is common in many buildings. A desired heating power for zone 31 is set by flexibly adjusting the heat emitting control 32. Similarly, a desired heating power for zone 11 may be set by flexibly adjusting the heat emitting control 12. According to a preferred variant of the invention, any intermediary heat controls 18 are always set to a maximum possible flow rate (independent of the desired heating powers of the entailing zones 11, 31). Setting a desired heating power is thus adjusted only with the heat emitting controls 12, 32. This procedure is of particular advantage if the intermediary heat control 18 comprises a pump. This pump is activated continuously / permanently. Frequent on / off switching is thus avoided, which would deteriorate the pump's life expectancy. Nevertheless, the heat emitting controls 15, 35 following the intermediary heat control 18 still allow to restrict the heating powers to the desired levels.

## Claims

1. A method for controlling a heating system (1), the method comprising the steps of:
- heating a liquid with a boiler (3) or another heater,
- supplying the liquid along at least a first pipe circuit (61, 62), using a pump connected to said first pipe circuit (61, 62), to a plurality of heating zones (11, 21, 31, 41, 51), each heating zone (11, 21, 31, 41, 51) corresponding to one or more heat radiators (15, 35), wherein heat emitting controls (12, 22, 32, 42, 52) are provided, each of which being configured to set a heating power of an associated heat radiator (15, 35),
- receiving desired heating powers for the heating zones (11, 21, 31, 41, 51),
- determining which of the desired heating powers is the largest desired heating power,
- setting the heat emitting control (12, 22, 32, 42, 52) corresponding to the heating zone with the largest desired heating power (21) to its maximum possible heating power,
**characterized in that** the method comprises the steps of
transmitting desired heating powers for the heating zones (11, 21,31, 41, 51) to the control unit (5) via communication devices arranged in the respective heating zones (11. 21, 31. 41, 51), wherein desired heating powers for the different heating zones (11, 21, 31, 41, 51) are determined from a monotone function that defines a desired heating power via a difference T_{D} - T_{M}, wherein T_{M} is a measured temperature in the respective heating zone (11. 21, 31, 41, 51) and T_{D} is a desired temperature in the respective heating zone (11, 21. 31, 41, 51), and
- controlling said pump to set a flow rate of the liquid through the at least first pipe circuit (61, 62) such that said set maximum possible heating power is equal to the largest desired heating power, or
controlling said boiler (3) or said another heater, which is a device burning fossil fuels and/or using electrical energy or a chemical reaction to produce heat, such that said set maximum possible heating power is equal to the largest desired heating power-
wherein said boiler (3) or said other heater or flow rate is controlled in dependence of the largest desired heating power but independent of the other desired heating powers, and
wherein heat emitting controls that correspond to the same heating zone are set equally.

2. The method of claim 1,
wherein the heating system (1) further comprises an intermediary heat control (18) connected between the boiler (3) or said other heater and at least two of the heat emitting controls (12, 32),
the intermediary heat control (18) being configured to set a flow rate to the at least two of the heat emitting controls (12, 32) and thus affecting the maximum possible heating power for said at least two of the heat emitting controls (12, 32),
the method comprising the step of:
setting the intermediary heat control (18) to a maximum possible flow rate,
regardless of the desired heating powers of the at least two of the heat emitting controls (12, 32).

3. The method of any one of the claims 1-2,
further comprising the step of: if the value of the largest desired heating power is changed but remains the largest desired heating power, then the corresponding heat emitting control (12, 22, 32, 42, 52) does not adjust the corresponding heating power, but rather the boiler (3) or said other heater or the pump is controlled such that the maximum possible heating power set for said heating zone with the largest desired heating power (21) is equal to the changed largest desired heating power.

4. A heating system (1) comprising:
- a boiler (3) or another heater configured to heat a liquid,
- a plurality of heat radiators (15, 35), each heat radiator (15, 35) comprising one heat emitting control (12, 22, 32, 42, 52),
- at least a first pipe circuit (61, 62) fluidly connecting the boiler (3) or said another heater with heat radiators (15, 35),
- a pump connected with the pipe circuit (61, 62) for pumping heated liquid through the first pipe circuit (61, 62), and
a heating control system comprising:
- said plurality of heat emitting controls (12, 22, 32, 42, 52), each heat emitting control (12, 22, 32, 42, 52) being configured to set a heating power of a respective heat radiator (15, 35), the heat emitting controls (12, 22, 32, 42, 52) corresponding to a plurality of heating zones (11, 21, 31, 41, 51),
the heating system (1) further comprises:
- communication devices arranged in the heating zones (11, 21, 31, 41, 51) and configured to transmit desired heating powers for the heating zones (11. 21, 31, 41, 51) to the control unit (5), wherein desired heating powers for the different heating zones (11, 21, 31, 41, 51) are determined from a monotone function that defines a desired heating power via a difference T_{D} - T_{M}, wherein T_{M} is a measured temperature in the respective heating zone (11, 21. 31, 41, 51) and T_{D} is a desired temperature in the respective heating zone (11, 21, 31, 41, 51),
the heating system (1) further comprises a control unit (5) configured to
- control at least one of: said boiler (3) or said other heater for providing heated liquid for the heat radiators (15, 35), and the pump for transporting heated liquid to the heat radiators (15, 35), the control unit (5) thus affecting maximum possible heating powers that can be set at the heat emitting controls (12, 22, 32, 42, 52),
- receive desired heating powers for the heating zones (11, 21, 31, 41, 51), and determine which of the desired heating powers is the largest desired heating power,
- set the heat emitting control (22) corresponding to the heating zone with the largest desired heating power (21) to its maximum possible heating power,
the heating system being **characterized in that** the control unit (5) is configured to
- control the pump to set a flow rate of heated liquid such that said set maximum possible heating power is equal to the largest desired heating power, or
control said boiler (3) or said another heater, which is a device burning fossil fuels and/or using electrical energy or a chemical reaction to produce heat, such that said set maximum possible heating power is equal to the largest desired heating power,
wherein the control unit (5) is configured to control said boiler (3) or said other heater or flow rate in dependence of the largest desired heating power but independent of the other desired heating powers, and to set heat emitting controls that correspond to the same heating zone equally.

5. The heating system of claim 4,
wherein the control unit (5) is further configured to set heating powers of those heat emitting controls (12, 32, 42, 52) that correspond to other heating zones (11, 31, 41, 51) than the heating zone with the largest desired heating power (21) in dependence of
- the desired heating powers for the respective heating zones (11, 31, 41, 51), and
- the current settings of the boiler (3) or said other heater and the pump.

6. The heating system of claim 4 or 5,
wherein each heat emitting control (12, 22, 32, 42, 52) is configured to set a flow rate of the heated liquid through the respective heat radiator (15, 35) for setting the respective heating power.

7. The heating system of any one of claims 4-6,
wherein each heat emitting control (12, 22, 32, 42, 52) comprises
- a valve (13, 23, 43, 53) for adjustably setting the flow rate through the respective heat radiator (15, 35), and/or
- a heat radiator pump for adjustably setting the flow rate through the respective heat radiator (15, 35).

8. The heating system of any one of the claims 4-7,
wherein the control unit (5) is configured to control the pump to set the flow rate of heated liquid by time modulating the flow rate of heated liquid between two possible values.

9. The heating system (1) of any one of the claims 4-8,
further comprising:
- a second pipe circuit (62) arranged in parallel to the first pipe circuit (61), wherein some of the heat radiators (15, 35) are arranged at the first pipe circuit (61) and others of the heat radiators are arranged at the second pipe circuit (62),
- a mixer (60) configured to mix heated liquid and another liquid, the mixer (60) being connected between the boiler (3) and the first pipe circuit (61) and being connected between the boiler (3) and the second pipe circuit (62),
the control unit (5) being further configured to:
control the mixer (60) such that only liquid heated by the boiler (3) and not the another liquid flows through the pipe circuit (61, 62) at which the heating zone with the largest desired heating power (21) is located.

## Patentansprüche

1. Verfahren zum Steuern eines Heizsystems (1), wobei das Verfahren die folgenden Schritte umfasst:
- Erwärmen einer Flüssigkeit mit einem Erhitzer (3) oder einer anderen Heizeinrichtung,
- Leiten der Flüssigkeit entlang zumindest einem ersten Rohrleitungskreislauf (61, 62), unter Verwendung einer Pumpe, die mit dem ersten Rohrleitungskreislauf (61, 62) verbunden ist, zu einer Mehrzahl an Heizzonen (11, 21, 31, 41, 51), wobei jede Heizzone (11, 21, 31, 41, 51) einem oder mehreren Heizkörpern (15, 35) entspricht, wobei Heizsteuerungen (12, 22, 32, 42, 52) vorgesehen sind, von denen jede dazu eingerichtet ist, eine Wärmeleistung von einem zugehörigen Heizkörper (15, 35) einzustellen,
- Empfangen gewünschter Wärmeleistungen für die Heizzonen (11, 21, 31, 41,51),
- Bestimmen, welche der gewünschten Wärmeleistungen die größte gewünschte Wärmeleistung ist,
- Einstellen der Heizsteuerung (12, 22, 32, 42, 52), welche der Heizzone mit der größten gewünschten Wärmeleistung (21) entspricht, auf ihre maximal mögliche Wärmeleistung,
**dadurch gekennzeichnet, dass** das Verfahren die folgenden Schritte umfasst:
Übertragen gewünschter Wärmeleistungen für die Heizzonen (11, 21, 31, 41, 51) an die Steuereinheit (5) über Kommunikationsgeräte, die in den jeweiligen Heizzonen (11, 21, 31, 41, 51) angeordnet sind, wobei gewünschte Wärmeleistungen für die verschiedenen Heizzonen (11, 21, 31, 41, 51) über eine monotone Funktion bestimmt werden, welche eine gewünschte Wärmeleistung mittels einer Differenz T_{D} - T_{M} definiert, wobei T_{M} eine gemessene Temperatur in der jeweiligen Heizzone (11, 21, 31, 41, 51) ist und T_{D} eine gewünschte Temperatur in der jeweiligen Heizzone (11, 21, 31, 41, 51) ist, und
- Steuern der Pumpe zum Einstellen einer Strömungsrate der Flüssigkeit durch den mindestens ersten Rohrleitungskreislauf (61, 62), so dass die eingestellte maximal mögliche Wärmeleistung gleich der größten gewünschten Wärmeleistung ist, oder
Steuern des Erhitzers (3) oder der anderen Heizeinrichtung, welche eine Vorrichtung ist, die fossile Brennstoffe verbrennt und/oder elektrische Energie oder eine chemische Reaktion zum Erzeugen von Wärme nutzt, so dass die eingestellte maximal mögliche Wärmeleistung gleich der größten gewünschten Wärmeleistung ist,
wobei der Erhitzer (3) oder die genannte andere Heizeinrichtung oder die Strömungsrate abhängig von der größten gewünschten Wärmeleistung aber unabhängig von den anderen gewünschten Wärmeleistungen gesteuert wird, und
wobei Heizsteuerungen, die zu derselben Heizzone gehören, gleich eingestellt werden.

2. Das Verfahren nach Anspruch 1,
wobei das Heizsystem (1) außerdem eine zwischengeschaltete Heizsteuerung (18) umfasst, welche zwischen dem Erhitzer (3) oder der genannten anderen Heizeinrichtung und zumindest zwei der Heizsteuerungen (12, 32) verbunden ist,
wobei die zwischengeschaltete Heizsteuerung (18) dazu eingerichtet ist, eine Strömungsrate zu den zumindest zwei der Heizsteuerungen (12, 32) einzustellen und so die maximal mögliche Wärmeleistung für die genannten zumindest zwei der Heizsteuerungen (12, 32) zu beeinflussen,
wobei das Verfahren den folgenden Schritt umfasst:
Einstellen der zwischengeschalteten Heizsteuerung (18) auf eine maximal mögliche Strömungsrate, unabhängig von den gewünschten Wärmeleistungen der zumindest zwei der Heizsteuerungen (12, 32).

3. Das Verfahren nach einem der Ansprüche 1-2,
welches außerdem den folgenden Schritt umfasst:
Wird der Wert der größten gewünschten Wärmeleistung geändert und bleibt aber die größte gewünschte Wärmeleistung, so passt die entsprechende Heizsteuerung (12, 22, 32, 42, 52) nicht die zugehörige Wärmeleistung an, vielmehr wird stattdessen der Erhitzer (3) oder die genannte andere Heizeinrichtung oder die Pumpe so gesteuert, dass die maximal mögliche Wärmeleistung, die für die genannte Heizzone mit der größten gewünschten Wärmeleistung (21) eingestellt ist, gleich der geänderten größten gewünschten Wärmeleistung wird.

4. Ein Heizsystem (1), umfassend:
- einen Erhitzer (3) oder eine andere Heizeinrichtung, die zum Erhitzen einer Flüssigkeit eingerichtet ist,
- eine Mehrzahl an Heizkörpern (15, 35), wobei jeder Heizkörper (15, 35) eine Heizsteuerung (12, 22, 32, 42, 52) aufweist,
- zumindest einen ersten Rohrleitungskreislauf (61, 62), der fluidmäßig den Erhitzer (3) oder die genannte andere Heizeinrichtung mit Heizkörpern (15, 35) verbindet,
- eine Pumpe, die mit dem Rohrleitungskreislauf (61, 62) verbunden ist, um erhitzte Flüssigkeit durch den ersten Rohrleitungskreislauf (61, 62) zu pumpen, und
ein Heizsteuersystem, umfassend:
- die genannte Mehrzahl an Heizsteuerungen (12, 22, 32, 42, 52), wobei jede Heizsteuerung (12, 22, 32, 42, 52) dazu eingerichtet ist, eine Wärmeleistung eines jeweiligen Heizkörpers (15, 35) einzustellen, wobei die Heizsteuerungen (12, 22, 32, 42, 52) einer Mehrzahl an Heizzonen (11, 21, 31, 41, 51) entsprechen,
wobei das Heizsystem außerdem umfasst:
- Kommunikationsgeräte, die in den Heizzonen (11, 21, 31, 41, 51) angeordnet und dazu eingerichtet sind, gewünschte Wärmeleistungen für die Heizzonen (11, 21, 31, 41, 51) an die Steuereinheit (5) zu senden, wobei gewünschte Wärmeleistungen für die verschiedenen Heizzonen (11, 21, 31, 41, 51) über eine monotone Funktion bestimmt werden, welche eine gewünschte Wärmeleistung mittels einer Differenz T_{D} - T_{M} definiert, wobei T_{M} eine gemessene Temperatur in der jeweiligen Heizzone (11, 21, 31, 41, 51) ist und T_{D} eine gewünschte Temperatur in der jeweiligen Heizzone (11, 21, 31, 41, 51) ist,
wobei das Heizsystem (1) außerdem eine Steuereinheit (5) umfasst, welche eingerichtet ist zum
- Steuern von zumindest einem von folgendem: den genannten Erhitzer (3) oder die genannte andere Heizeinrichtung, um die Heizkörper (15, 35) mit erhitzter Flüssigkeit zu versorgen, und die Pumpe zum Transportieren von erhitzter Flüssigkeit zu den Heizkörpern (15, 35), womit die Steuereinheit (5) maximal mögliche Wärmeleistungen, die durch die Heizsteuerungen (12, 22, 32, 42, 52) eingestellt werden können, beeinflusst,
- Empfangen gewünschter Wärmeleistungen für die Heizzonen (11, 21, 31, 41, 51) und Bestimmen, welche der gewünschten Wärmeleistungen die größte gewünschte Wärmeleistung ist,
- Einstellen der Heizsteuerung (22), die der Heizzone mit der größten gewünschten Wärmeleistung (21) entspricht, auf ihre maximal mögliche Wärmeleistung,
wobei das Heizsystem **dadurch gekennzeichnet ist, dass** die Steuereinheit (5) eingerichtet ist zum
- Steuern der Pumpe, um eine Strömungsrate der erhitzten Flüssigkeit so einzustellen, dass die genannte eingestellte maximal mögliche Wärmeleistung gleich der größten gewünschten Wärmeleistung ist, oder Steuern des Erhitzers (3) oder der genannten anderen Heizeinrichtung, welche eine Vorrichtung ist, die fossile Brennstoffe verbrennt und/oder elektrische Energie oder eine chemische Reaktion zum Erzeugen von Wärme nutzt, so dass die eingestellte maximal mögliche Wärmeleistung gleich der größten gewünschten Wärmeleistung ist,
wobei die Steuereinheit (5) dazu eingerichtet ist, den Erhitzer (3) oder die genannte andere Heizeinrichtung oder die Strömungsrate abhängig von der größten gewünschten Wärmeleistung aber unabhängig von den anderen gewünschten Wärmeleistungen zu steuern, und Heizsteuerungen, die zu derselben Heizzone gehören, gleich einzustellen.

5. Das Heizsystem nach Anspruch 4,
wobei die Steuereinheit (5) außerdem dazu eingerichtet ist, Wärmeleistungen von denjenigen Heizsteuerungen (12, 32, 42, 52), die anderen Heizzonen (11, 31, 41, 51) als der Heizzone mit der größten gewünschten Wärmeleistung (21) entsprechen, einzustellen in Abhängigkeit von
- den gewünschten Wärmeleistungen für die jeweiligen Heizzonen (11, 31, 41, 51), und
- den momentanen Einstellungen des Erhitzers (3) oder der genannten anderen Heizeinrichtung und der Pumpe.

6. Das Heizsystem nach Anspruch 4 oder 5,
wobei jede Heizsteuerung (12, 22, 32, 42, 52) eingerichtet ist zum Einstellen der Strömungsrate der erhitzten Flüssigkeit durch den jeweiligen Heizkörper (15, 35) zum Einstellen der jeweiligen Wärmeleistung.

7. Das Heizsystem nach einem der Ansprüche 4-6,
wobei jede Heizsteuerung (12, 22, 32, 42, 52) umfasst:
- ein Ventil (13, 23, 43, 53) zum anpassbaren Einstellen der Strömungsrate durch den jeweiligen Heizkörper (15, 35), und/oder
- eine Heizkörperpumpe zum anpassbaren Einstellen der Strömungsrate durch den jeweiligen Heizkörper (15, 35).

8. Das Heizsystem nach einem der Ansprüche 4-7,
wobei die Steuereinheit (5) dazu eingerichtet ist, die Pumpe so zu steuern, dass die Strömungsrate der erhitzten Flüssigkeit durch Zeitmodulation der Strömungsrate der erhitzten Flüssigkeit zwischen zwei möglichen Werten eingestellt wird.

9. Das Heizsystem (1) nach einem der Ansprüche 4-8,
welches außerdem umfasst:
- einen zweiten Rohrleitungskreislauf (62), der parallel zum ersten Rohrleitungskreislauf (61) angeordnet ist,
wobei einige der Heizkörper (15, 35) am ersten Rohrleitungskreislauf (61) angeordnet sind und andere der Heizkörper am zweiten Rohrleitungskreislauf (62) angeordnet sind,
- einen Mischer (60), der zum Mischen von einer erhitzten Flüssigkeit und einer anderen Flüssigkeit eingerichtet ist, wobei der Mischer (60) zwischen dem Erhitzer (3) und dem ersten Rohrleitungskreislauf (61) verbunden ist und zwischen dem Erhitzer (3) und dem zweiten Rohrleitungskreislauf (62) verbunden ist,
wobei die Steuereinheit (5) außerdem eingerichtet ist zum:
Steuern des Mischers (60) so, dass nur Flüssigkeit, die von dem Erhitzer (3) erhitzt wurde, und nicht die andere Flüssigkeit durch denjenigen Rohrleitungskreislauf (61, 62) fließt, an welchem sich die Heizzone mit der größten gewünschten Wärmeleistung (21) befindet.

## Revendications

1. Procédé pour contrôler un système de chauffage (1), le procédé comprenant les étapes suivantes :
- chauffer un liquide avec une chaudière (3) ou un autre dispositif de chauffage,
- conduire le liquide le long d'au moins un premier circuit de conduites (61, 62) en utilisant une pompe reliée audit premier circuit de conduites (61, 62), vers une pluralité de zones de chauffage (11, 21, 31, 41, 51), chaque zone de chauffage (11, 21, 31, 41, 51) correspondant à un ou plusieurs radiateurs (15, 35), tandis que sont prévues des commandes de chauffage (12, 22, 32, 42, 52) qui sont toutes configurées pour régler une puissance de chauffage d'un radiateur associé (15, 35),
- recevoir des puissances de chauffage désirées pour les zones de chauffage (11, 21, 31, 41, 51),
- déterminer laquelle des puissances de chauffage désirées est la puissance de chauffage désirée la plus grande,
- régler la commande de chauffage (12, 22, 32, 42, 52) correspondant à la zone de chauffage ayant la plus grande puissance de chauffage (21) désirée sur sa puissance de chauffage maximale possible,
**caractérisé en ce que** la méthode comprend les étapes suivantes :
transmettre des puissances de chaleur désirées pour les zones de chauffage (11, 21, 31, 41, 51) à l'unité de commande (5) par le biais d'appareils de communication agencés dans les zones de chauffage respectives (11, 21, 31, 41, 51), tandis que des puissances de chauffage désirées pour les différentes zones de chauffage (11, 21, 31, 41, 51) sont déterminées via une fonction monotone qui définit une puissance de chauffage désirée par le biais d'une différence T_{D} - T_{M}, tandis que T_{M} est une température mesurée dans la zone de chauffage respective (11, 21, 31, 41, 51) et T_{D} est une température désirée dans la zone de chauffage respective (11, 21, 31, 41, 51), et
- contrôler ladite pompe pour régler un taux de débit du liquide dans le au moins premier circuit de conduites (61, 62), de sorte que ladite puissance de chauffage maximale possible réglée est équivalente à la plus grande puissance de chauffage désirée, ou
contrôler ladite chaudière (3) ou ledit autre dispositif de chauffage, qui est un dispositif brûlant des combustibles fossiles et/ou utilisant de l'énergie électrique ou une réaction chimique pour produire de la chaleur, de sorte que ladite puissance de chauffage maximale réglée soit équivalente à la plus grande puissance de chauffage désirée,
tandis que ladite chaudière (3) ou ledit autre dispositif de chauffage ou le taux de débit est contrôlé en fonction de la plus grande puissance de chauffage désirée mais indépendamment des autres puissances de chauffage désirées, et
tandis que des commandes de chauffage qui correspondent à la même zone de chauffage sont réglées de la même façon.

2. Le procédé selon la revendication 1,
tandis que le système de chauffage (1) comprend également une commande de chauffage intermédiaire (18) reliée entre la chaudière (3) ou ledit autre dispositif de chauffage et au moins deux des commandes de chauffage (12, 32),
la commande de chauffage intermédiaire (18) étant configurée pour régler un taux de débit vers les au moins deux des commandes de chauffage (12, 32), affectant ainsi la puissance de chauffage maximale possible pour lesdites au moins deux des commandes de chauffage (12, 32),
le précédé comprenant l'étape suivante :
régler la commande de chauffage intermédiaire (18) sur un taux de débit maximal possible, indépendamment des puissances de chauffage désirées des au moins deux des commandes de chauffage (12, 32).

3. Le procédé selon une des revendications 1 à 2,
comprenant également l'étape suivante : si la valeur de la plus grande puissance de chauffage désirée est modifiée mais qu'elle reste la plus grande puissance de chauffage désirée, alors la commande de chauffage (12, 22, 32, 42, 52) correspondante ne s'ajuste pas à la puissance de chauffage correspondante, mais au lieu de cela, la chaudière (3) ou ledit autre dispositif de chauffage ou la pompe est contrôlé(e) de sorte que la puissance de chauffage maximale possible réglée pour ladite zone de chauffage avec la plus grande puissance de chauffage (21) désirée soit équivalente à la plus grande puissance de chauffage désirée modifiée.

4. Un système de chauffage (1) comprenant :
- une chaudière (3) ou un autre dispositif de chauffage configuré pour chauffer un liquide,
- une pluralité de radiateurs (15, 35), chaque radiateur (15, 35) comprenant une commande de chauffage (12, 22, 32, 42, 52),
- au moins un premier circuit de conduites (61, 62) connectant fluidiquement la chaudière (3) ou ledit autre dispositif de chauffage avec les radiateurs (15, 35),
- une pompe reliée au circuit de conduites (61, 62) pour pomper du liquide chauffé dans le premier circuit de conduites (61, 62) et
un système de contrôle de chauffage comprenant :
- ladite pluralité de commandes de chauffage (12, 22, 32, 42, 52), chaque commande de chauffage (12, 22, 32, 42, 52) étant configurée pour régler une puissance de chauffage d'un radiateur respectif (15, 35), les commandes de chauffage (12, 22, 32, 42, 52) correspondant à une pluralité des zones de chauffage (11, 21, 31, 41, 51),
le système de chauffage comprenant également :
- des appareils de communication agencés dans les zones de chauffage (11, 21, 31, 41, 51) et configurés pour transmettre des puissances de chauffage désirées pour les zones de chauffage (11, 21, 31, 41, 51) à l'unité de commande (5), tandis que des puissances de chauffage désirées pour les différentes zones de chauffage (11, 21, 31, 41, 51) sont déterminées via une fonction monotone qui définit une puissance de chauffage désirée par le biais d'une différence T_{D} - T_{M}, tandis que T_{M} est une température mesurée dans la zone de chauffage respective (11, 21, 31, 41, 51) et T_{D} est une température désirée dans la zone de chauffage respective (11, 21, 31, 41, 51),
le système de chauffage (1) comprenant également une unité de commande (5) configurée pour
- contrôler au moins un des éléments suivants : ladite chaudière (3) ou ledit autre dispositif de chauffage pour fournir du liquide chauffé aux radiateurs (15, 35), et la pompe pour transporter du liquide chauffé vers les radiateurs (15, 35), l'unité de commande (5) affectant ainsi des puissances de chauffage maximales possibles qui peuvent être réglées via les commandes de chauffage (12, 22, 32, 42, 52),
- recevoir des puissances de chauffage désirées pour les zones de chauffage (11, 21, 31, 41, 51), et déterminer laquelle des puissances de chauffage désirées est la plus grande puissance de chauffage désirée,
- régler la commande de chauffage (22) correspondant à la zone de chauffage avec la plus grande puissance de chauffage (21) désirée sur sa puissance de chauffage maximale possible,
le système de chauffage étant **caractérisé en ce que** l'unité de commande (5) est configurée pour
- contrôler la pompe pour régler un taux de débit du liquide chauffé, de sorte que la puissance de chauffage maximale possible soit équivalente à la plus grande puissance de chauffage désirée, ou
contrôler ladite chaudière (3) ou ledit autre dispositif de chauffage, qui est un dispositif brûlant des combustibles fossiles et/ou utilisant de l'énergie électrique ou une réaction chimique pour produire de la chaleur, de sorte que la puissance de chauffage maximale possible réglée soit équivalente à la plus grande puissance de chauffage désirée,
tandis que l'unité de commande (5) est configurée pour contrôler ladite chaudière (3) ou ledit autre dispositif de chauffage ou le taux de débit en fonction de la plus grande puissance de chauffage désirée mais indépendamment des autres puissances de chauffage désirées, et pour régler de la même façon des commandes de chauffage qui correspondent à la même zone de chauffage.

5. Le système de chauffage selon la revendication 4,
tandis que l'unité de commande (5) est également configurée pour régler des puissances de chauffage des commandes de chauffage (12, 32, 42, 52) qui correspondent à d'autres zones de chauffage (11, 31, 41, 51) que la zone de chauffage avec la plus grande puissance de chauffage (21) désirée en fonction
- des puissances de chauffage désirées pour les zones de chauffage respectives (11, 31, 41, 51), et
- des réglages actuels de la chaudière (3) ou dudit autre dispositif de chauffage et de la pompe.

6. Le système de chauffage selon la revendication 4 ou 5,
tandis que chaque commande de chauffage (12, 22, 32, 42, 52) est configurée pour régler un taux de débit du liquide chauffé dans le radiateur respectif (15, 35) pour régler la puissance de chauffage respective.

7. Le système de chauffage selon une des revendications 4 à 6,
tandis que chaque commande de chauffage (12, 22, 32, 42, 52) comprend
- une soupape (13, 23, 43, 53) pour régler de manière ajustable le taux de débit dans le radiateur respectif (15, 35), et/ou
- une pompe de radiateur pour régler de manière ajustable le taux de débit dans le radiateur respectif (15, 35).

8. Le système de chauffage d'une des revendications 4 à 7,
tandis que l'unité de commande (5) est configurée pour contrôler la pompe de sorte à régler le taux de débit du liquide chauffé en modulant dans le temps le taux de débit du liquide chauffé entre deux valeurs possibles.

9. Le système de chauffage (1) selon une des revendications 4 à 8, comprenant également
- un deuxième circuit de conduites (62) agencé parallèlement au premier circuit de conduites (61),
tandis que certains des radiateurs (15, 35) sont agencés au premier circuit de conduites (61) et d'autres parmi les radiateurs sont agencés au deuxième circuit de conduites (62),
- un mélangeur (60) configuré pour mélanger un liquide chauffé et un autre liquide, le mélangeur (60) étant relié entre la chaudière (3) et le premier circuit de conduites (61) et étant relié entre la chaudière (3) et le deuxième circuit de conduites (62),
l'unité de commande (5) étant également configurée pour :
contrôler le mélangeur (60) de sorte que seul du liquide chauffé par la chaudière (3) et non pas l'autre liquide s'écoule dans le circuit de conduites (61, 62) où la zone de chauffage avec la plus grande puissance de chauffage (21) désirée est située.
